(19) 

Europäisches
Patentamt
European
Patent Office
Office européen
des brevets

(11)  **EP 2 407 735 B1**

(12)  **EUROPEAN PATENT SPECIFICATION**

(45) Date of publication and mention
of the grant of the patent:
**20.07.2016  Bulletin 2016/29**

(21) Application number: **10788220.1**

(22) Date of filing: **30.04.2010**

(51) Int Cl.:
*F25B 13/00* *(2006.01)*        *F25B 49/02* *(2006.01)*

(86) International application number:
**PCT/JP2010/003082**

(87) International publication number:
**WO 2011/135630 (03.11.2011 Gazette 2011/44)**

(54) **HEAT PUMP SYSTEM**

WÄRMEPUMPENSYSTEM

SYSTÈME DE POMPE À CHALEUR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**18.01.2012  Bulletin 2012/03**

(73) Proprietors:
• **Daikin Industries, Ltd.**
  **Osaka-shi, Osaka 530-8323 (JP)**
• **Daikin Europe N.V.**
  **8400 Oostende (BE)**

(72) Inventors:
• **HONDA, Masahiro**
  **Oostende 8400 (BE)**
• **ODA, Yoshinari**
  **Oostende 8400 (BE)**

(74) Representative: **Hoffmann Eitle**
**Patent- und Rechtsanwälte PartmbB**
**Arabellastraße 30**
**81925 München (DE)**

(56) References cited:
**JP-A- 11 094 370        JP-A- 2000 274 859
JP-A- 2001 012 786        JP-A- 2005 282 972
JP-A- 2007 232 225**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### TECHNICAL FIELD

The present invention relates to a heat pump system. The present invention particularly relates to a heat pump system for performing liquid injection into the intake side of a compressor from the portion of a main refrigerant circuit that extends from the outlet of a radiator to a main depressurization mechanism, the main refrigerant circuit being formed by connecting a variable-capacity compressor, a radiator, a variable-type main depressurization mechanism, and an evaporator.

### BACKGROUND ART

A conventional air conditioning apparatus is described in JP-A-2007-163099). This air conditioning apparatus (heat pump system) has a refrigerant circuit formed by connecting a variable-capacity compressor, an indoor heat exchanger (radiator) for functioning as a refrigerant radiator during air-warming operation, a variable-type outdoor expansion valve (main depressurization mechanism), and an outdoor heat exchanger (evaporator) for functioning as a refrigerant evaporator during air-warming operation.

A heat pump system comprising the features defined in the preamble of claim 1 is disclosed in JP-A-2000-274859.

### SUMMARY OF THE INVENTION

For such purposes as protecting the compressor and/or preventing reduced operating efficiency in the conventional heat pump system described above, the discharge temperature, which is the temperature of the refrigerant discharged from the compressor, must be prevented from increasing to an excessive degree.

In order to satisfy this requirement, a configuration may be adopted in which the main depressurization mechanism is controlled so that the refrigerant in the outlet of the evaporator is in a saturated state. A configuration may also be adopted in which a bypass tube is provided for connecting the intake side of the compressor and the portion of the refrigerant circuit that extends from the outlet of the radiator to the main depressurization mechanism, and liquid injection is performed for introducing the liquid refrigerant flowing through the bypass tube into the intake side of the compressor. In this configuration, the bypass tube is provided with a depressurization mechanism (bypass depressurization mechanism) for depressurizing the refrigerant flowing through the bypass tube, and the bypass tube and the bypass depressurization mechanism constitute a bypass circuit.

However, the former method is a method that the marginal range is narrow in principle, and the former method is difficult to adapt under operating conditions in which the compression ratio of the compressor is large.

In contrast, the latter method is a method that the marginal range is wide, and the latter method is easily adapted in comparison with the former method even under operating conditions in which the compression ratio of the compressor is large. However, there is a risk of reduced reliability of the compressor due to liquid compression and the like that occurs when the flow rate (liquid injection flow rate) of the liquid refrigerant introduced into the intake side of the compressor through the bypass tube increases. Particularly when a variable-capacity compressor is used, liquid compression and the like is prone to occur under operating conditions in which the operating capacity of the compressor is small, i.e., operating conditions in which the flow rate (refrigerant circulation flow rate) of the refrigerant circulated through the refrigerant circuit is reduced. Therefore, when the bypass depressurization mechanism is composed of a solenoid on-off valve and a capillary tube, the flow passage resistance of the solenoid on-off valve and the capillary tube is selected so as to be suitable for operating conditions in which the operating capacity of the compressor is small, i.e., operating conditions in which the refrigerant circulation flow rate is reduced. The liquid injection flow rate then becomes inadequate under operating conditions in which the operating capacity of the compressor is large. The operating capacity of the compressor can thereby no longer be increased in order to maintain reliability of the compressor under operating conditions in which the compression ratio of the compressor is large, and it is difficult to maintain the desired operating capability.

An object of the present invention is to provide a heat pump system for performing liquid injection into the intake side of a compressor from the portion of a main refrigerant circuit that extends from the outlet of a radiator to a main depressurization mechanism, the main refrigerant circuit being formed by connecting a variable-capacity compressor, a radiator, a variable-type main depressurization mechanism, and an evaporator, wherein the desired operating capability is obtained while the reliability of the compressor is maintained, even under operating conditions in which the compression ratio of the compressor is large.

A heat pump system according to a first aspect of the present invention comprises the features of claim 1.

In this heat pump system, since the bypass depressurization mechanism is variable-type, and liquid injection control is performed for controlling the bypass depressurization mechanism so that the discharge temperature is equal to the target discharge temperature, the opening degree of the bypass depressurization mechanism can be changed in accordance with the operating capacity of the compressor, and the liquid injection flow rate can be increased or decreased. The problem of an inadequate liquid injection flow rate is therefore less prone to occur in this heat pump system than in a case in which the bypass depressurization mechanism is composed of a solenoid on-off valve and a capillary tube. The desired operating capability is thereby easily obtained even under operating conditions in which the compression ratio of the compressor is large.

However, the liquid injection flow rate is determined primarily by the balance between the flow passage resistance of the bypass circuit side and the flow passage resistance of the main refrigerant circuit side. The balance between the flow passage resistance of the bypass circuit side and the flow passage resistance of the main refrigerant circuit side herein depends primarily on the difference between the flow passage resistance of the bypass depressurization mechanism and the flow passage resistance of the main depressurization mechanism. The bypass depressurization mechanism should therefore be controlled in view of the state of the main depressurization mechanism. If no restriction is placed on the action of the bypass depressurization mechanism, the bypass depressurization mechanism is controlled so that the opening degree thereof merely increases when the discharge temperature is higher than the target discharge temperature, regardless of the opening degree of the main depressurization mechanism. For example, when the opening degree of the main depressurization mechanism is small, the liquid injection flow rate increases significantly in comparison with the flow rate of the refrigerant flowing through the main refrigerant circuit side and drawn into the compressor, and there is a risk of liquid compression and other problems. When liquid injection control is thus performed without placing a restriction on the action of the bypass depressurization mechanism, the state of the main depressurization mechanism is not taken into account, and it is difficult to maintain reliability of the compressor.

Therefore, in this heat pump system, the upper limit opening degree of the bypass depressurization mechanism in liquid injection control is determined by a correlation value with respect to the opening degree of the main depressurization mechanism as described above, and a restriction which takes into account the state of the main depressurization mechanism is thereby placed on the action of the bypass depressurization mechanism.

Through this configuration, when the discharge temperature is higher than the target discharge temperature in the heat pump system, even when the opening degree of the bypass depressurization mechanism is controlled so as to increase, the bypass depressurization mechanism can be opened no further than the upper limit opening degree determined by the correlation value with respect to the opening degree of the main depressurization mechanism. Liquid compression and other problems are therefore less prone to occur, and the reliability of the compressor is easily maintained. Since the movable opening degree range of the bypass depressurization mechanism in liquid injection control is also then determined according to the opening degree of the main depressurization mechanism, the controllability in liquid injection control is also enhanced.

In this heat pump system as described above, the desired operating capability can be obtained while the reliability of the compressor is maintained, even under operating conditions in which the compression ratio of the compressor is large.

Further, during liquid injection control, when a change in the capacity of the compressor occurs, and the discharge temperature is no longer equal to the target discharge temperature, the bypass depressurization mechanism is controlled so that the discharge temperature is equal to the target discharge temperature.

However, when the degree of change in the capacity of the compressor is large, time may be required for the discharge temperature to reach the target discharge temperature.

Therefore, in this heat pump system, when the capacity of the compressor is changed during liquid injection control, the opening degree of the bypass depressurization mechanism is changed to a predicted opening degree, which is an opening degree predicted according to the degree of change in the capacity of the compressor, as described above.

Through this configuration, during liquid injection control in the heat pump system, the opening degree of the bypass depressurization mechanism is changed to the predicted opening degree according to the degree of change in the capacity of the compressor, prior to the action whereby the bypass depressurization mechanism is controlled so that the discharge temperature is equal to the target discharge temperature. The discharge temperature can therefore be made to quickly reach the target discharge temperature, and the controllability of the liquid injection control can be enhanced.

A heat pump system according to a second aspect of the present invention is the heat pump system according to the first aspect, wherein the correlation value includes a pressure drop coefficient that is a coefficient determined by a main circuit-side reference pressure drop coefficient, which is a reference value of the flow passage resistance of the main depressurization mechanism, and a bypass-side reference pressure drop coefficient, which is a reference value of the flow passage resistance of the bypass depressurization mechanism.

In this heat pump system, the upper limit opening degree of the bypass depressurization mechanism in liquid injection control can be even more appropriately set with consideration for the pressure drop characteristics of the main refrigerant circuit and the bypass circuit side.

A heat pump system according to a third aspect of the present invention is the heat pump system according to the second aspect, wherein the correlation value includes a dryness coefficient, which is a coefficient determined by an allowed dryness corresponding to the allowed limit of dryness of the refrigerant drawn into the compressor, a bypass-side dryness which is the dryness of the refrigerant in the outlet of the bypass tube, and a main circuit-side dryness which is the dryness of the refrigerant in the outlet of the evaporator.

In this heat pump system, the upper limit opening degree of the bypass depressurization mechanism in liquid injection control can be even more appropriately set by taking into account the dryness of the refrigerant drawn into the compressor, the refrigerant being obtained by the merging of the refrigerant flowing through the bypass circuit and the refrigerant flowing through the main refrigerant circuit.

A heat pump system according to a fourth aspect of the present invention is the heat pump system according to any of the first through fourth aspects, wherein the radiator is a heat exchanger for heating an aqueous medium by radiating of refrigerant compressed in the compressor, and is connected to an aqueous medium circuit for utilizing the heat of the aqueous medium heated in the radiator.

In a heat pump system which utilizes the heat of an aqueous medium heated in a radiator, a high-temperature aqueous medium is sometimes needed, and operating conditions in which the compression ratio of the compressor is large are prone to occur in such cases. It thus tends to be difficult to obtain the desired operating capability while ensuring the reliability of the compressor.

However, in this heat pump system, the bypass depressurization mechanism is variable-type, liquid injection control is performed for controlling the bypass depressurization mechanism so that the discharge temperature is equal to the target discharge temperature, and the upper limit opening degree of the bypass depressurization mechanism in the liquid injection control is determined by the correlation value with respect to the opening degree of the main depressurization mechanism, as described above. Therefore, although this heat pump system is configured such that operating conditions in which the compression ratio of the compressor is large are prone to occur, the desired operating capability can be obtained while the reliability of the compressor is maintained.

## BRIEF DESCRIPTION OF THE DRAWINGS

FIG. 1 is a schematic structural view showing a heat pump system according to an embodiment of the present invention.

FIG. 2 is a flowchart showing the transition to liquid injection control.

FIG. 3 is a flowchart showing liquid injection control.

FIG. 4 is a flowchart showing predictive control of a bypass expansion valve.

## DESCRIPTION OF EMBODIMENTS

Embodiments of the heat pump system according to the present invention will be described based on the drawings.

<Configuration>

-General-

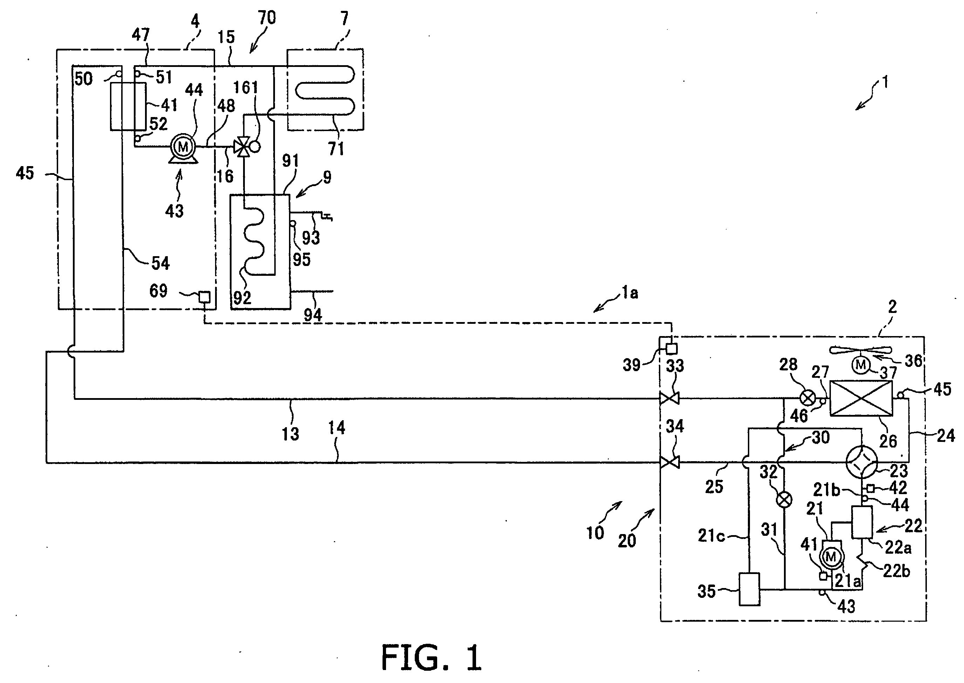

FIG. 1 is a schematic structural view showing the heat pump system 1 according to an embodiment of the present invention. The heat pump system 1 is an apparatus capable of such operations as heating an aqueous medium by utilizing a vapor compression heat pump cycle. The heat pump system 1 herein is capable of air-warming operation and/or hot-water supply operation by heating an aqueous medium.

The heat pump system 1 has primarily a heat source unit 2, a usage unit 4, a liquid refrigerant communication tube 13, a gas refrigerant communication tube 14, an aqueous medium heating unit 7, a hot-water storage unit 9, and aqueous medium communication tubes 15, 16. A refrigerant circuit 10 is formed by connecting the heat source unit 2 and the usage unit 4 via the refrigerant communication tubes 13, 14. An aqueous medium circuit 70 is formed by connecting the usage unit 4, the hot-water storage unit 9, and the aqueous medium heating unit 7, via the aqueous medium communication tubes 15, 16. The HFC-type refrigerant HFC-410A is enclosed as the refrigerant in the refrigerant circuit 10. Water used as an aqueous medium is also circulated in the aqueous medium circuit 70.

-Heat Source Unit-

The heat source unit 2 is installed outdoors, is connected to the usage unit 4 via the refrigerant communication tubes 13, 14, and constitutes a portion of the refrigerant circuit 10.

The heat source unit 2 has primarily a compressor 21, an oil separation mechanism 22, a switching mechanism 23, a heat-source-side heat exchanger 26, a heat-source-side expansion valve 28 as a main depressurization mechanism, a bypass tube 31, an accumulator 35, a liquid-side shutoff valve 33, and a gas-side shutoff valve 34.

The compressor 21 is a mechanism for compressing the refrigerant. The compressor 21 used herein is a hermetic compressor in which a rotary-type, scroll-type, or other positive-displacement compression element (not shown) housed in a casing (not shown) is driven by a compressor motor 21a which is also housed in the casing. The rotation speed (i.e., the operating frequency) of the compressor motor 21a can be varied by an inverter apparatus (not shown), and the capacity of the compressor 21 can thereby be controlled.

The oil separation mechanism 22 is a mechanism for separating refrigeration machine oil included in the refrigerant that is discharged from the compressor 21 and returning the refrigeration machine oil to the intake of the compressor 21. The oil separation mechanism 22 has primarily an oil separator 22a provided to a discharge tube 21b of the compressor 21; and an oil return tube 22b for connecting the oil separator 22a and an intake tube 21c of the compressor 21. The oil separator 22a is a device for separating refrigeration machine oil included in the refrigerant that is discharged from the compressor 21. The oil return tube 22b has a capillary tube, and is a refrigerant tube for returning the refrigeration machine oil separated from the refrigerant in the oil separator 22a to the intake tube 21c of the compressor 21.

The switching mechanism 23 is a four-way switching valve capable of switching between a heat-source-side radiating operation state in which the heat-source-side heat exchanger 26 functions as a refrigerant radiator, and a heat-source-side evaporating operation state in which the heat-source-side heat exchanger 26 functions as a refrigerant evaporator. The switching mechanism 23 is connected to the discharge tube 21b, the intake tube 21c, a first heat-source-side gas refrigerant tube 24 connected to the gas side of the heat-source-side heat exchanger 26, and a second heat-source-side gas refrigerant tube 25 connected to the gas-side shutoff valve 34. The switching mechanism 23 is capable of switching for communicating the discharge tube 21 b with the first heat-source-side gas refrigerant tube 24, and communicating the second heat-source-side gas refrigerant tube 25 with the intake tube 21c (this switching corresponding to the heat-source-side radiating operation state, indicated by solid lines in the switching mechanism 23 in FIG 1). The switching mechanism 23 is also capable of switching for communicating the discharge tube 21b with the second heat-source-side gas refrigerant tube 25, and communicating the first heat-source-side gas refrigerant tube 24 with the intake tube 21 c (this switching corresponding to the heat-source-side evaporating operation state, indicated by dashed lines in the switching mechanism 23 in FIG 1). The switching mechanism 23 is not limited to a four-way switching valve, and may be a switching mechanism configured so as to be capable of switching the same directions of heat-source-side refrigerant flow as those described above through the use of a combination of a plurality of solenoid valves or the like, for example.

The heat-source-side heat exchanger 26 is a heat exchanger for functioning as a refrigerant radiator or evaporator by exchanging heat between the refrigerant and outdoor air. A heat-source-side liquid refrigerant tube 27 is connected to the liquid side of the heat-source-side heat exchanger 26, and the first heat-source-side gas refrigerant tube 24 is connected to the gas side thereof. The outdoor air for heat exchange with the refrigerant in the heat-source-side heat exchanger 26 is fed by a heat-source-side fan 36 which is driven by a heat-source-side fan motor 37. The rotation speed (i.e., operating frequency) of the heat-source-side fan motor 37 can be varied by an inverter apparatus (not shown), and the airflow of the heat-source-side fan 36 can thereby be controlled.

The heat-source-side expansion valve 28 is an electrically driven expansion valve for depressurizing the refrigerant flowing through the heat-source-side liquid refrigerant tube 27, and is provided to the heat-source-side liquid refrigerant tube 27.

The accumulator 35 is provided to the intake tube 21c, and is a container for temporarily storing the refrigerant circulated through the refrigerant circuit 10 before the refrigerant is drawn into the compressor 21 from the intake tube 21c.

The liquid-side shutoff valve 33 is a valve provided at the connection between the heat-source-side liquid refrigerant tube 27 and the liquid refrigerant communication tube 13. The gas-side shutoff valve 34 is a valve provided at the connection between the second heat-source-side gas refrigerant tube 25 and the gas refrigerant communication tube 14.

The bypass tube 31 is a refrigerant tube for connecting the intake side of the compressor 21 (the portion of the intake tube 21c extending from the outlet of the accumulator 35 to the intake of the compressor 21) and the portion of the heat-source-side liquid refrigerant tube 27 that extends from the liquid-side shutoff valve 33 to the heat-source-side expansion valve 28. A bypass expansion valve 32 as a bypass depressurization mechanism is provided to the bypass tube 31. The bypass expansion valve 32 is composed of an electrically driven expansion valve, and depressurizes the liquid refrigerant flowing through the bypass tube 31.

Various sensors are provided to the heat source unit 2. Specifically, the heat source unit 2 is provided with an intake pressure sensor 41, a discharge pressure sensor 42, an intake temperature sensor 43, a discharge temperature sensor 44, a heat-source-side heat exchange gas-side temperature sensor 45, and a heat-source-side heat exchange liquid-side temperature sensor 46. The intake pressure sensor 41 is a pressure sensor for detecting an intake pressure Ps, which is the pressure of the refrigerant in the intake of the compressor 21. The discharge pressure sensor 42 is a pressure sensor for detecting a discharge pressure Pd, which is the pressure of the refrigerant in the discharge of the compressor 21. The intake temperature sensor 43 is a temperature sensor for detecting an intake temperature Ts, which is the temperature of the refrigerant in the intake of the compressor 21. The discharge temperature sensor 44 is a temperature sensor for detecting a discharge temperature Td, which is the temperature of the refrigerant in the discharge of the compressor 21. The heat-source-side heat exchange gas-side temperature sensor 45 is a temperature sensor for detecting a heat-source-side heat exchange gas-side temperature Thg, which is the temperature of the refrigerant on the gas side of the heat-source-side heat exchanger 26. The heat-source-side heat exchange liquid-side temperature sensor 46 is a temperature sensor for detecting a heat-source-side heat exchange liquid-side temperature Thl, which is the temperature of the refrigerant on the liquid side of the heat-source-side heat exchanger 26. The heat source unit 2 has a heat-source-side controller 39 for controlling the action of each component of the heat source unit 2. The heat-source-side controller 39 has a microcomputer and/or memory and other components for controlling the heat source unit 2, and is configured so as to be capable of exchanging control signals and the like with a usage-side controller 69 of the usage unit 4 described hereinafter.

-Liquid Refrigerant Communication Tube-

The liquid refrigerant communication tube 13 is connected to the heat-source-side liquid refrigerant tube 27 via the liquid-side shutoff valve 33. The liquid refrigerant communication tube 13 is a refrigerant tube capable of directing the refrigerant to the outside of the heat source unit 2 from the outlet of the heat-source-side heat exchanger 26 which functions as a refrigerant radiator when the switching mechanism 23 is in the heat-source-side radiating operation state. The liquid refrigerant communication tube 13 is also a refrigerant tube capable of introducing the heat-source-side refrigerant from outside the heat source unit 2 into the inlet of the heat-source-side heat exchanger 26 which functions as a refrigerant evaporator when the switching mechanism 23 is in the heat-source-side evaporating operation state.

-Gas Refrigerant Communication Tube-

The gas refrigerant communication tube 14 is connected to the second heat-source-side gas refrigerant tube 25 via the gas-side shutoff valve 34. The gas refrigerant communication tube 14 is a refrigerant tube capable of introducing the refrigerant into the intake of the compressor 21 from the outside of the heat source unit 2 when the switching mechanism 23 is in the heat-source-side radiating operation state. The gas refrigerant communication tube 14 is also a refrigerant tube capable of directing the heat-source-side refrigerant to the outside of the heat source unit 2 from the discharge of the compressor 21 when the switching mechanism 23 is in the heat-source-side evaporating operation state.

-Usage Unit-

The usage unit 4 is installed indoors, is connected to the heat source unit 2 via the refrigerant communication tubes 13, 14, and constitutes a portion of the refrigerant circuit 10. The usage unit 4 is also connected to the hot-water storage unit 9 and the aqueous medium heating unit 7 via the aqueous medium communication tubes 15, 16, and constitutes a portion of the aqueous medium circuit 70.
The usage unit 4 has primarily a usage-side heat exchanger 41 and a circulation pump 43.
The usage-side heat exchanger 41 is a heat exchanger for functioning as a refrigerant radiator by exchanging heat between the refrigerant and the aqueous medium. A usage-side liquid refrigerant tube 45 is connected to the liquid side of the flow passage through which refrigerant flows through the usage-side heat exchanger 41, and a usage-side gas refrigerant tube 54 is connected to the gas side of the flow passage through which refrigerant flows through the usage-side heat exchanger 41. A usage-side water inlet tube 47 is connected to the inlet side of the flow passage through which the aqueous medium flows through the usage-side heat exchanger 41, and a usage-side water outlet tube 48 is connected to the outlet side of the flow passage through which the aqueous medium flows through the usage-side heat exchanger 41. The liquid refrigerant communication tube 13 is connected to the usage-side liquid refrigerant tube 45, and the gas refrigerant communication tube 14 is connected to the usage-side gas refrigerant tube 54. The aqueous medium communication tube 15 is connected to the usage-side water inlet tube 47, and the aqueous medium communication tube 16 is connected to the usage-side water outlet tube 48.
The circulation pump 43 is a mechanism for increasing the pressure of the aqueous medium, and the circulation pump 43 used herein is a pump in which a centrifugal or positive-displacement pump element (not shown) is driven by a circulation pump motor 44. The circulation pump 43 is provided to the usage-side water outlet tube 48. The rotation speed (i.e., the operating frequency) of the circulation pump motor 44 can be varied by an inverter apparatus (not shown), and the capacity of the circulation pump 43 can thereby be controlled.

Various sensors are provided to the usage unit 4. Specifically, the usage unit 4 is provided with a usage-side heat exchange temperature sensor 50 for detecting a usage-side heat exchange liquid-side temperature Tul, which is the temperature of the refrigerant on the liquid side of the usage-side heat exchanger 41; an aqueous medium inlet temperature sensor 51 for detecting an aqueous medium inlet temperature Twr, which is the temperature of the aqueous medium in the inlet of the usage-side heat exchanger 41; and an aqueous medium outlet temperature sensor 52 for detecting an aqueous medium outlet temperature Twl, which is the temperature of the aqueous medium in the outlet of the usage-side heat exchanger 41. The usage unit 4 also has a usage-side controller 69 for controlling the action of each component of the usage unit 4. The usage-side controller 69 has a microcomputer and/or memory and other components for controlling the usage unit 4. The usage-side controller 69 is configured so as to be capable of exchanging control signals and the like with a remote control (not shown), and exchanging control signals and the like with the heat-source-side controller 39 of the heat source unit 2.

As described above, the refrigerant circuit 10 is formed by connecting the heat source unit 2 and the usage unit 4 via the refrigerant communication tubes 13, 14. The refrigerant circuit 10 is formed by a bypass circuit 30, which is composed of the bypass tube 31 and the bypass expansion valve 32, and a main refrigerant circuit 20, which is composed of the portion of the refrigerant circuit 10 other than the bypass circuit 30.

-Hot-water Storage Unit-

The hot-water storage unit 9 is installed indoors, is connected to the usage unit 4 via the aqueous medium communication tubes 15, 16, and constitutes a portion of the aqueous medium circuit 70.

The hot-water storage unit 9 has primarily a hot-water storage tank 91 and a heat exchange coil 92.

The hot-water storage tank 91 is a container for storing water as the aqueous medium for the hot water supply, a hot-water supply tube 93 for sending the aqueous medium as warm water to a faucet, shower, or the like is connected to the top of the hot-water storage tank 91, and a water supply tube 94 for replenishing the aqueous medium expended by the hot-water supply tube 93 is connected to the bottom of the hot-water storage tank 91.

The heat exchange coil 92 is provided inside the hot-water storage tank 91, and is a heat exchanger for functioning as a heater of the aqueous medium in the hot-water storage tank 91 by exchanging heat between the aqueous medium circulating through the aqueous medium circuit 70 arid the aqueous medium inside the hot-water storage tank 91. The aqueous medium communication tube 16 is connected to the inlet of the heat exchange coil 92, and the aqueous medium communication tube 15 is connected to the outlet thereof.

The hot-water storage unit 9 is thereby capable of heating the aqueous medium inside the hot-water storage tank 91 through the use of the aqueous medium circulating through the aqueous medium circuit 70, the aqueous medium having been heated in the usage unit 4, and storing the aqueous medium as warm water. The type of hot-water storage unit 9 used herein is a hot-water storage unit for storing in a hot-water storage tank the aqueous medium heated by heat exchange with the aqueous medium heated in the usage unit 4, but a type of hot-water storage unit for storing an aqueous medium heated in the usage unit 4 in a hot-water storage tank may also be used. The hot-water storage unit 9 herein is configured as a separate unit from the usage unit 4, but the hot-water storage unit 9 may also be housed within the usage unit 4.

Various sensors are also provided to the hot-water storage unit 9. Specifically, the hot-water storage unit 9 is provided with a hot-water storage temperature sensor 95 for detecting a hot-water storage temperature Twh, which is the temperature of the aqueous medium stored in the hot-water storage tank 91.

-Aqueous Medium Heating Unit-

The aqueous medium heating unit 7 is installed indoors. The aqueous medium heating unit 7 is connected to the usage unit 4 via the aqueous medium communication tubes 15, 16, and constitutes a portion of the aqueous medium circuit 70.

The aqueous medium heating unit 7 has primarily a heat exchange panel 71, and is composed of a radiator and/or a floor cooling/heating panel and other components.

The heat exchange panel 71 is provided alongside a wall or elsewhere indoors when configured as a radiator, and is provided under the floor or elsewhere indoors when configured as a floor cooling/heating panel. The heat exchange panel 71 is a heat exchanger for functioning as a radiator of the aqueous medium circulated through the aqueous medium circuit 70, the aqueous medium communication tube 16 is connected to the inlet of the heat exchange panel 71, and the aqueous medium communication tube 15 is connected to the outlet of the heat exchange panel 71.

-Aqueous Medium Communication Tubes-

The aqueous medium communication tube 15 is connected to the outlet of the heat exchange coil 92 of the hot-water storage unit 9, and the outlet of the heat exchange panel 71 of the aqueous medium cooling/warming unit 7. The aqueous medium communication tube 16 is connected to the inlet of the heat exchange coil 92 of the hot-water storage unit 9, and the inlet of the heat exchange panel 71 of the aqueous medium cooling/warming unit 7. The aqueous medium communication tube 16 is provided with an aqueous medium switching mechanism 161 capable of switching between feeding the aqueous medium circulated through the aqueous medium circuit 70 to both the hot-water storage unit 9 and the aqueous medium cooling/warming unit 7, or to any one of the hot-water storage unit 9 and the aqueous medium cooling/warming unit 7. The aqueous medium switching mechanism 161 is composed of a three-way valve.

As described above, the aqueous medium circuit 70 is formed by connecting the usage unit 4, the hot-water storage unit 9, and the aqueous medium heating unit 7 via the aqueous medium communication tubes 15, 16. The aqueous medium circuit 70 utilizes the heat of the aqueous medium heated in the usage-side heat exchanger 41 for functioning as a radiator of the refrigerant compressed in the compressor 21.

-Controller-

A controller 1a for controlling the operation of the heat pump system 1 is formed by connecting the usage-side controller 69 and the heat-source-side control unit 39 via transmission lines or the like, and the controller 1a is configured to perform the operations and/or various types of control described below.

<Action>

The action of the heat pump system 1. will next be described.

Operation of the heat pump system 1 includes an air-warming operation mode for performing only air-warming operation using the aqueous medium heating unit 7, a hot-water supply operation mode for performing only hot-water supply operation using the hot-water storage unit 9, and a hot-water supply/air-warming operation mode for simultaneously performing air-warming operation and hot-water supply operation using the aqueous medium heating unit 7 and the hot-water storage unit 9.

-Air-warming Operation Mode-

In the case of performing only air-warming operation using the aqueous medium heating unit 7, the switching mechanism 23 is switched to the heat-source-side evaporating operation state (indicated by dashed lines in the switching mechanism 23 in FIG. 1) in the refrigerant circuit 10. In the aqueous medium circuit 70, the aqueous medium switching mechanism 161 is switched to a state in which the aqueous medium is fed to the aqueous medium heating unit 7.

In the refrigerant circuit 10 in such a state, the refrigerant at a low pressure in the refrigeration cycle is drawn into the compressor 21 through the intake tube 21c and compressed to a high pressure in the refrigeration cycle, and subsequently discharged to the discharge tube 21b. In the oil separator 22a, the refrigeration machine oil is separated from the high-pressure refrigerant discharged to the discharge tube 21 b. The refrigeration machine oil separated from the refrigerant in the oil separator 22a is returned to the intake tube 21c through the oil return tube 22b. The high-pressure refrigerant from which the refrigeration machine oil has been separated is sent from the heat source unit 2 to the gas refrigerant communication tube 14 through the switching mechanism 23, the second heat-source-side gas refrigerant tube 25, and the gas-side shutoff valve 34.

The high-pressure refrigerant sent to the gas refrigerant communication tube 14 is sent to the usage unit 4. The high-pressure refrigerant sent to the usage unit 4 is sent to the usage-side heat exchanger 41 through the usage-side gas refrigerant tube 54. The high-pressure refrigerant sent to the usage-side heat exchanger 41 is heat-exchanged and radiated in the usage-side heat exchanger 41 with the aqueous medium circulated through the aqueous medium circuit 70 by the circulation pump 43. The high-pressure refrigerant radiated in the usage-side heat exchanger 41 is sent from the usage unit 4 to the liquid refrigerant communication tube 13 through the usage-side liquid refrigerant tube 45.

The refrigerant sent to the liquid refrigerant communication tube 13 is sent to the heat source unit 2. The refrigerant sent to the heat source unit 2 is sent to the heat-source-side liquid refrigerant tube 27 through the liquid-side shutoff valve 33. The refrigerant sent to the heat-source-side liquid refrigerant tube 27 is branched into two flows in the portion of the heat-source-side liquid refrigerant tube 27 that extends between the liquid-side shutoff valve 33 and the heat-source-side expansion valve 28, one flow is sent to the heat-source-side expansion valve 28, and the other flow is sent to the bypass tube 31. The refrigerant sent to the heat-source-side expansion valve 28 is depressurized in the heat-source-side expansion valve 28 to a low-pressure gas-liquid two-phase state and sent to the heat-source-side heat exchanger 26. The low-pressure refrigerant sent to the heat-source-side heat exchanger 26 is heat-exchanged and evaporated in the heat-source-side heat exchanger 26 with the outdoor air fed by the heat-source-side fan 36. The low-pressure refrigerant evaporated in the heat-source-side heat exchanger 26 is sent to the heat-source-side accumulator 35 through the first heat-source-side gas refrigerant tube 24 and the switching mechanism 23. The low-pressure heat-source-side refrigerant sent to the heat-source-side accumulator 35 is again drawn into the compressor 21 through the intake tube 21c. The refrigerant sent to the bypass tube 31 is depressurized by the bypass expansion valve 32 to a low-pressure gas-liquid two-phase state. The low-pressure refrigerant depressurized in the bypass expansion valve 32 is then merged in the intake tube 21 c with the low-pressure refrigerant sent to the heat-source-side accumulator 35 through the heat-source-side expansion valve 28 and the heat-source-side heat exchanger 26, and is drawn into the compressor 21. An action (liquid injection) is thus performed in which a portion of the refrigerant flowing through the main refrigerant circuit 20 is diverted to the bypass circuit 30 in the portion between the liquid-side shutoff valve 33 and the heat-source-side expansion valve 28 and returned to the compressor 21 together with the refrigerant that is returned to the intake side of the compressor 21 through the heat-source-side expansion valve 28 and the heat-source-side heat exchanger 26.

In the aqueous medium circuit 70, the aqueous medium circulated through the aqueous medium circuit 70 is heated by the radiating of the refrigerant in the usage-side heat exchanger 41. The aqueous medium heated in the usage-side heat exchanger 41 is drawn into the circulation pump 43 through the usage-side water outlet tube 48, the pressure of the aqueous medium is increased, and the aqueous medium is subsequently sent from the usage unit 4 to the aqueous medium communication tube 16. The aqueous medium sent to the aqueous medium communication tube 16 is sent to the aqueous medium heating unit 7 through the aqueous medium switching mechanism 161. The aqueous medium sent to the aqueous medium heating unit 7 is radiated in the heat exchange panel 71, the walls and other indoor areas are thereby heated, and the indoor floor is heated.

The action in the air-warming operation mode for performing only air-warming operation using the aqueous medium heating unit 7 is thus performed.

-Hot-water Supply Operation Mode-

In the case of performing only hot-water supply operation using the hot-water storage unit 9, the switching mechanism 23 is switched to the heat-source-side evaporating operation state (indicated by dashed lines in the switching mechanism 23 in FIG 1) in the refrigerant circuit 10. In the aqueous medium circuit 70, the aqueous medium switching mechanism 161 is switched to a state in which the aqueous medium is fed to the hot-water storage unit 9.

In the refrigerant circuit 10 in such a state, the same action as that of the air-warming operation described above is performed.

In the aqueous medium circuit 70, the aqueous medium sent from the usage unit 4 to the aqueous medium communication tube 16 is sent to the hot-water storage unit 9 through the aqueous medium switching mechanism 161. The aqueous medium sent to the hot-water storage unit 9 is heat-exchanged and radiated in the heat exchange coil 92 with the aqueous medium in the hot-water storage tank 91, and the aqueous medium in the hot-water storage tank 91 is thereby heated.

The action in the hot-water supply operation mode for performing only hot-water supply operation using the hot-water storage unit 9 is thus performed.

-Hot-water Supply/Air-warming Operation Mode-

In the case of simultaneously performing air-warming operation and hot-water supply operation using the aqueous medium heating unit 7 and the hot-water storage unit 9, the switching mechanism 23 is switched to the heat-source-side evaporating operation state (indicated by dashed lines in the switching mechanism 23 in FIG. 1) in the refrigerant circuit 10. In the aqueous medium circuit 70, the aqueous medium switching mechanism 161 is switched to a state in which the aqueous medium is fed to the aqueous medium heating unit 7 and the hot-water storage unit 9.

In the refrigerant circuit 10 in such a state, the same action as that of air-warming operation described above are performed.

In the aqueous medium circuit 70, the aqueous medium sent from the usage unit 4 to the aqueous medium communication tube 16 is sent to the aqueous medium heating unit 7 and the hot-water storage unit 9 through the aqueous medium switching mechanism 161. The aqueous medium sent to the aqueous medium heating unit 7 is radiated in the heat exchange panel 71, the walls and other indoor areas are thereby heated, and the indoor floor is heated. The aqueous medium sent to the hot-water storage unit 9 is also heat-exchanged and radiated in the heat exchange coil 92 with the aqueous medium in the hot-water storage tank 91, and the aqueous medium in the hot-water storage tank 91 is thereby heated.

The action in the hot-water supply/air-warming operation mode for simultaneously performing air-warming operation and hot-water supply operation using the aqueous medium heating unit 7 and the hot-water storage unit 9 is thus performed.

-Control of the Compressor-

In the heat pump system 1, the aqueous medium circulated through the aqueous medium circuit 70 is heated by the radiating in the usage-side heat exchanger 41 of the refrigerant circulated through the refrigerant circuit 10, as described above. Control for stabilizing the high pressure in the refrigeration cycle is preferably performed at this time so that high-temperature aqueous medium is stably obtained in the usage-side heat exchanger 41.

Therefore, the heat pump system 1 is configured so that the compressor 21 is a variable-capacity compressor, and the controller 1a controls the capacity of the compressor 21 so that the discharge saturation temperature Tc is equal to a predetermined target discharge saturation temperature Tcs, by using the saturation temperature (i.e., the discharge saturation temperature Tc) that corresponds to the pressure of the refrigerant in the discharge of the compressor 21 as a representative value for the pressure of the refrigerant in the refrigeration cycle. The discharge saturation temperature Tc herein is a value obtained by converting the discharge pressure Pd to the saturation temperature. More specifically, the controller 1a performs a control so as to increase the rotation speed (i.e., operating frequency) of the compressor 21, thereby increasing the operating capacity of the compressor 21, when the discharge saturation temperature Tc is less than the target discharge saturation temperature Tcs, and performs a control so as to reduce the rotation speed (i.e., operating frequency) of the compressor 21, thereby reducing the operating capacity of the compressor 21, when the discharge saturation temperature Tc is higher than the target discharge saturation temperature Tcs.

Since the high pressure in the refrigeration cycle is thereby stable in the heat pump system 1, high-temperature aqueous medium can be stably obtained.

The target discharge saturation temperature Tcs is preferably set to the appropriate value at this time in order to obtain the desired temperature of the aqueous medium.

The controller 1a therefore sets a predetermined target aqueous medium outlet temperature Twls, which is the target value of the temperature of the aqueous medium in the outlet of the usage-side heat exchanger 41, and sets the target discharge saturation temperature Tcs as a value that is varied according to the target aqueous medium outlet temperature Twls. More specifically, the controller 1a sets the target discharge saturation temperature Tcs to 65°C when the target aqueous medium outlet temperature Twls is set to 60°C, or sets the target discharge saturation temperature Tcs to 30°C when the target aqueous medium outlet temperature Twls is set to 25°C, for example, setting the target discharge saturation temperature Tcs according to a function within the setting range of the target aqueous medium outlet temperature Twls so that the target discharge saturation temperature Tcs is a high temperature slightly higher than the target aqueous medium outlet temperature Twls, in accordance with the high temperature to which the target aqueous medium outlet temperature Twls is set.

Since the target discharge saturation temperature Tcs is thereby appropriately set in accordance with the target aqueous medium outlet temperature Twls, the desired target aqueous medium outlet temperature Twls is easily obtained in the heat pump system 1, and responsive control can be performed even when the target aqueous medium outlet temperature Twls is changed.

-Control of the Heat-source-side Expansion Valve-

In the heat pump system 1, the refrigerant circulated through the refrigerant circuit 10 is depressurized in the heat-source-side expansion valve 28 to a low-pressure gas-liquid two-phase state and subsequently evaporated in the heat-source-side heat exchanger 26, as described above. At this time, in order to stabilize the state of the refrigerant drawn into the compressor 21, control is preferably performed to stabilize the state of the refrigerant in the outlet of the heat-source-side heat exchanger 26 functioning as a refrigerant evaporator.

Therefore, in the heat pump system 1, the heat-source-side expansion valve 28 as the main depressurization mechanism is variable-type, and the controller 1a controls the heat-source-side expansion valve 28 so that an outlet degree of superheat SHh, which is the degree of superheat of the refrigerant in the outlet of the heat-source-side heat exchanger 26, is equal to a predetermined target outlet degree of superheat SHhs. The outlet refrigerant degree of superheat SHh herein is obtained by converting the intake pressure Ps to a saturation temperature (i.e., intake saturation temperature Te) that corresponds to the pressure of the refrigerant in the intake of the compressor 21, and subtracting the intake saturation temperature Te from the usage-side heat exchange liquid-side temperature Tul. Although not adopted herein, a configuration may be adopted in which a temperature sensor for detecting the refrigerant temperature corresponding to the intake saturation temperature Te is provided to the usage-side heat exchanger 41, and the outlet refrigerant degree of superheat SHh is obtained by subtracting the refrigerant temperature from the usage-side heat exchange liquid-side temperature Tul. More specifically, the controller 1a controls the opening degree OPe of the heat-source-side expansion valve 28 so that the opening degree OPe of the heat-source-side expansion valve 28 decreases when the outlet degree of superheat SHh is less than the target outlet degree of superheat SHhs, and controls the opening degree OPe of the heat-source-side expansion valve 28 so that the opening degree OPe of the heat-source-side expansion valve 28 increases when the outlet degree of superheat SHh is greater than the target outlet degree of superheat SHhs.

Since the state of the refrigerant in the outlet of the heat-source-side heat exchanger 26 is thereby stabilized in the heat pump system 1, the state of the refrigerant drawn into the compressor 21 can be stabilized.

-Liquid Injection Control-

For such purposes as protecting the compressor 21 and/or preventing reduced operating efficiency in the heat pump system 1, the discharge temperature Td must be kept from increasing to an excessive degree. Therefore, the bypass circuit 30 is provided, and liquid injection is performed for introducing the liquid refrigerant, which flows through the bypass tube 31 constituting the bypass circuit 30, into the intake side of the compressor 21.

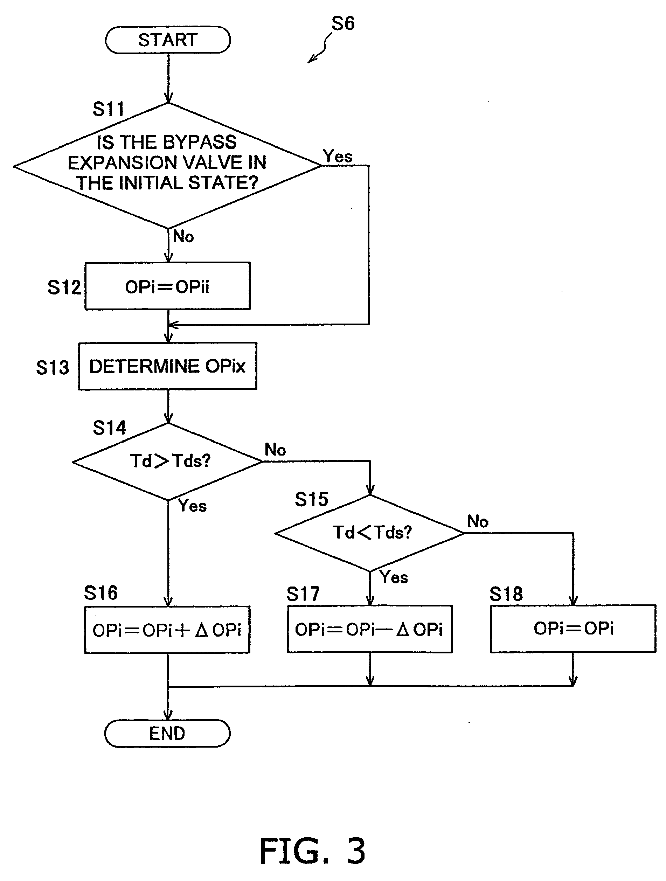

In other words, in the heat pump system 1, the bypass expansion valve 32 used as the bypass depressurization mechanism is variable-type, and the controller 1a performs liquid injection control for controlling the bypass expansion valve 32 so that the discharge temperature Td is equal to a target discharge temperature Tds. More specifically, the controller 1a performs control by reducing the opening degree OPi of the bypass expansion valve 32 so that the flow rate (liquid injection flow rate Gi) of liquid refrigerant on the bypass circuit 30 side (i.e., the side on which refrigerant is introduced to the intake side of the compressor 21 through the bypass tube 31 and the bypass expansion valve 32) decreases when the discharge temperature Td is less than the target discharge temperature Tds (see steps S 15 and S 17 of FIG. 3), and performs control by increasing the opening degree OPi of the bypass expansion valve 32 so that the liquid injection flow rate Gi increases when the discharge temperature Td is greater than the target discharge temperature Tds (see steps S14 and S16 of FIG 3).

The opening degree OPi of the bypass expansion valve 32 is thereby changed in accordance with the operating capacity of the compressor 21 in the heat pump system 1, and the liquid injection flow rate Gi can be increased or decreased. The problem of an inadequate liquid injection flow rate Gi is therefore less prone to occur in the heat pump system 1 than in a case in which the bypass depressurization mechanism is composed of a solenoid on-off valve and a capillary tube. Since the target discharge saturation temperature Tcs is thereby also set to a high temperature (e.g., 65°C) when the target aqueous medium outlet temperature Twls is set to a high temperature (e.g., 60°C), operating conditions occur in which the compression ratio of the compressor 21 is large, but the desired operating capability can still be obtained under such operating conditions.

However, the liquid injection flow rate Gi is determined primarily by the balance between the flow passage resistance of the bypass circuit 30 side and the flow passage resistance of the main refrigerant circuit 20 side. The balance between the flow passage resistance of the bypass circuit 30 side and the flow passage resistance of the main refrigerant circuit 20 side herein depends primarily on the difference between the flow passage resistance of the bypass depressurization mechanism and the flow passage resistance of the main depressurization mechanism. The bypass expansion valve 32 should therefore be controlled in view of the state of the heat-source-side expansion valve 28. If no restriction is placed on the action of the bypass expansion valve 32, the bypass expansion valve 32 is controlled so that the opening degree OPi thereof simply increases when the discharge temperature Td is higher than the target discharge temperature Tds, regardless of the opening degree OPe of the heat-source-side expansion valve 28. For example, when the opening degree OPe of the heat-source-side expansion valve 28 is small, the liquid injection flow rate Gi increases significantly in comparison with the flow rate (main circuit-side flow rate Ge) of the refrigerant flowing through the main refrigerant circuit 20 side and drawn into the compressor 21, and there is a risk of liquid compression and other problems. When liquid injection control is thus performed without placing a restriction on the action of the bypass expansion valve 32, the state of the bypass expansion valve 32 is not taken into account, and it is difficult to maintain reliability of the compressor 21.

Therefore, in the heat pump system 1, the controller 1a determines the upper limit opening degree OPix of the bypass expansion valve 32 as the bypass depressurization mechanism in liquid injection control by a correlation value with respect to the opening degree OPe of the heat-source-side expansion valve 28 as the main depressurization mechanism, and thereby places a restriction which takes into account the state of the heat-source-side expansion valve 28 on the action of the bypass expansion valve 32.

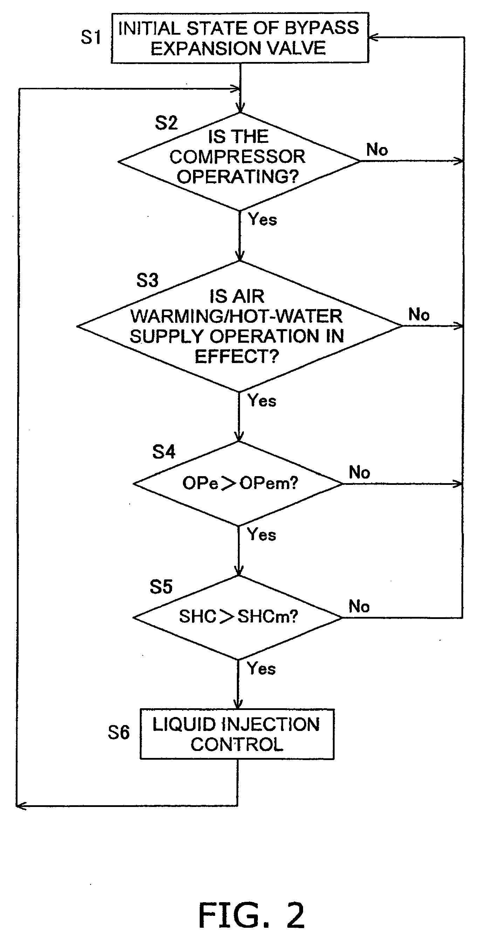

Liquid injection control including the decision of the upper limit opening degree OPix of the bypass expansion valve 32 will be described below using FIGS. 2 and 3. In this control, the capacity of the compressor 21 is controlled so that the discharge saturation temperature Tc is equal to the target discharge saturation temperature Tcs, and the opening degree of the heat-source-side expansion valve 28 is controlled so that the outlet degree of superheat SHh is equal to the target outlet degree of superheat SHhs, as described above.

First, when not performing liquid injection control, the controller 1a sets the bypass expansion valve 32 to a fully closed initial state in which the opening degree OPi is 0%, for example (step S1). The opening degree OPi of the bypass expansion valve 32 in the fully closed state is 0%, a fully open state corresponding to an opening degree OPi of 100%. The opening degree OPe of the heat-source-side expansion valve 28 in the fully closed state is also 0%, a fully open state corresponding to an opening degree OPe of 100%, the same as the bypass expansion valve 32.

In steps S2, S3, S4, and S5, the controller 1a then determines whether the operating state of the heat pump system 1 satisfies conditions for performing liquid injection control. Specifically, the controller 1a determines in step S2 whether the compressor 21 is operating. In step S3, the controller 1a determines whether the air-warming operation mode, the hot-water supply operation mode, or the hot-water supply/air-warming operation mode is in effect. Decisions are made in steps S2 and S3 as to whether the heat pump system 1 is operating. In step S4, the controller 1a determines whether the opening degree OPe of the heat-source-side expansion valve 28 is greater than a minimum opening degree OPem. Then, in step S5, the controller 1a determines whether the discharge degree of superheat SHC of the compressor 21 is greater than a minimum discharge degree of superheat SHCm. The minimum opening degree OPem herein is the minimum opening degree of the heat-source-side expansion valve 28 which can be assumed during normal operation such as in the air-warming operation mode, the hot-water supply operation mode, or the hot-water supply/air-warming operation mode. The discharge degree of superheat SHC is obtained by subtracting the discharge saturation temperature Tc from the discharge temperature Td. The minimum discharge degree of superheat SHCm herein is the minimum discharge degree of superheat which can be assumed during normal operation such as in the air-warming operation mode, the hot-water supply operation mode, or the hot-water supply/air-warming operation mode. Through these steps S4, S5, decisions are made as to whether the operation of the heat pump system 1 is in a transitional and/or irregular state such as occurs during starting and/or stopping of operation. When a decision is made that the conditions in steps S2 through S5 are satisfied, the process transitions to the liquid injection control of step S6 with the assumptions that the heat pump system 1 is operating and that this operation is not transitional and/or irregular operation such as occurs during starting and/or stopping of operation. Liquid injection control is thereby performed during operation in the air-warming operation mode, the hot-water supply operation mode, or the hot-water supply/air-warming operation mode, and not during transitional and/or irregular operation during starting and/or stopping of operation.

In liquid injection control, the controller 1a first determines whether the bypass expansion valve 32 is in the initial state (in which the opening degree OPi is 0%) (step S11). Since the bypass expansion valve 32 is in the initial state immediately after the start of operation, the process transitions to step S12. In step S12, the controller 1a starts liquid injection for introducing the liquid refrigerant flowing through the bypass tube 31 into the intake side of the compressor 21, by setting the opening degree OPi of the bypass expansion valve 32 to a liquid injection starting opening degree OPii. The liquid injection starting opening degree OPii herein is an opening degree of up to 10%, and preparation immediately prior to the transition to the liquid injection control of steps S13 through S18 is thereby accomplished. Setting of the opening degree OPi of the bypass expansion valve 32 to the liquid injection starting opening degree OPii takes several tens of seconds to several minutes, for example. In a case in which the liquid injection control of steps S13 through S 18 has already been performed, rather than being performed immediately after the start of operation, the process skips step S12 and transitions to step S13.

The controller 1a then determines the upper limit opening degree OPix of the bypass expansion valve 32 in liquid injection control (step S13). The upper limit opening degree OPix of the bypass expansion valve 32 herein is determined by a correlation value with respect to the opening degree OPe of the heat-source-side expansion valve 28, and this decision will be described in detail.

First, where Xe is a main circuit-side dryness which is the dryness of the refrigerant in the outlet of the heat-source-side heat exchanger 26, and Xi is a bypass-side dryness which is the dryness of the refrigerant in the outlet of the bypass tube 32, Xs is the dryness of the refrigerant (i.e., the refrigerant drawn into the compressor 21 at the time of liquid injection) after merging of the refrigerant which flows through the main refrigerant circuit 20 side to be drawn into the compressor 21, and the refrigerant which flows through the bypass circuit 30 side to be drawn into the compressor 21. The dryness Xs is expressed by the following equation.

$$Xs = (Xe \times Ge + Xi \times Gi)/(Ge + Gi) \qquad\qquad Eq.\ A$$

When the flow passage resistance of the bypass circuit 30 side is designated as CVi, and the flow passage resistance of the main refrigerant circuit 20 side is designated as CVe, since the liquid injection flow rate Gi and the main circuit-side flow rate Ge are proportional to the CVi and the CVe, respectively, and the pressure drop and/or density of the liquid refrigerant are the same for the bypass circuit 30 side and the main refrigerant circuit 20 side, Equation A is expressed as shown below.

$$Xs = (Xe \times CVe + Xi \times CVi)/(CVe + CVi) \qquad\qquad Eq.\ B$$

When the allowed dryness corresponding to an allowed limit of the dryness Xs determined from the perspective of protecting the compressor 21 from liquid compression and the like is designated as Xsa, Equation B is expressed as shown below.

$$Xsa \leq (Xe \times CVe + Xi \times CVi)/(CVe + CVi) \qquad \text{Eq. C}$$

Further modifying Equation C produces the equation shown below.

$$CVi \leq (Xe - Xsa)/(Xsa - Xi) \times CVe \qquad \text{Eq. D}$$

When the valve characteristics of the heat-source-side expansion valve 28 and the bypass expansion valve 32 are assumed to be linear, the flow passage resistance of the heat-source-side expansion valve 28 and the flow passage resistance of the bypass expansion valve 32 account for most of the flow passage resistance CVe of the main refrigerant circuit 20 side and the flow passage resistance CVi of the bypass circuit 30 side, respectively, and Equation D is therefore expressed as shown below.

$$(Ki \times OPi/OPis) \leq (Xe - Xsa)/(Xsa - Xi) \times (Ke \times OPe/OPes) \qquad \text{Eq. E}$$

In this equation, Ke and Ki are a main circuit-side reference pressure drop coefficient which is a reference value of the flow passage resistance of the heat-source-side expansion valve 28, and a bypass-side reference pressure drop coefficient which is a reference value of the flow passage resistance of the bypass expansion valve 32, respectively. The values OPes and OPis are the opening degree of the heat-source-side expansion valve 28 in the main circuit-side reference pressure drop coefficient Ke, and the opening degree of the bypass expansion valve 32 in the bypass-side reference pressure drop coefficient Ki, respectively.

Modifying Equation E produces the equation shown below.

$$OPi \leq (Xe - Xsa)/(Xsa - Xi) \times (Ke \times OPis)/(Ki \times OPes) \times OPe \qquad \text{Eq. F}$$

In other words, liquid injection control is preferably performed so that the opening degree OPi of the bypass expansion valve 32 is within an opening degree range that satisfies Equation F, which is a correlation equation with respect to the opening degree OPe of the heat-source-side expansion valve 28. Equation F is then expressed as shown below when the opening degree OPi of the bypass expansion valve 32 in Equation F is designated as the upper limit opening degree OPix.

$$OPix = \beta \times \gamma \times OPe \qquad \text{Eq. G}$$

In this equation, $\beta$ is a dryness coefficient determined by the allowed dryness Xsa, the bypass-side dryness Xi, and the main circuit-side dryness Xe, as shown in Equation F. The term $\gamma$ is a pressure drop coefficient determined by the main circuit-side reference pressure drop coefficient Ke and the bypass-side reference pressure drop coefficient Ki, as shown in Equation F. When the valve characteristics of the heat-source-side expansion valve 28 and the bypass expansion valve 32 are not linear, (Ki x OPi/OPis) and (Ke x OPe/OPes) in Equation E differ from each other (and accordingly in Equations F and G as well), but the concept of the upper limit opening degree OPix is the same as described above.

The upper limit opening degree OPix of the bypass expansion valve 32 is thus determined by a correlation value with respect to the opening degree OPe of the heat-source-side expansion valve 28. This correlation value includes the dryness coefficient $\beta$ and the pressure drop coefficient $\gamma$. The dryness coefficient $\beta$ herein is computed from the allowed dryness Xsa determined from such factors as the operating characteristics of the compressor 21, and the main circuit-side dryness Xe and bypass-side dryness Xi assumed in a standard operating state of the refrigerant circuit 10. However, the main circuit-side dryness Xe and the bypass-side dryness Xi may also be obtained from the measured values of the discharge pressure Pd and/or intake pressure Ps, the usage-side heat exchange liquid-side temperature Tul, the intake temperature Ts, and the heat-source-side heat exchange liquid-side temperature Thl. As for the pressure drop coefficient $\gamma$, the pressure drop coefficients of the heat-source-side expansion valve 28 and the bypass expansion valve 32 in the fully open state (i.e., OPe = 100%, OPi = 100%) are computed as each of the main circuit-side reference pressure drop coefficient Ke and the bypass-side reference pressure drop coefficient Ki. However, the reference values are not limited to those of the fully open state, and may be for another opening degree state.

In step S13, the controller 1a uses Equation G above to determine the maximum opening degree OPix of the bypass expansion valve 32 from the opening degree OPe of the heat-source-side expansion valve 28. The movable opening degree range of the bypass expansion valve 32 in liquid injection control is thereby restricted so as to be equal to or less than the maximum opening degree OPix.

Then, in steps S14 and S15, the controller 1a determines whether the discharge temperature Td is less than the target discharge temperature Tds, and whether the discharge temperature Td is greater than the target discharge temperature Tds. When the discharge temperature Td is less than the target discharge temperature Tds, the controller 1a performs control so as to reduce the opening degree OPi of the bypass expansion valve 32 (i.e., OPi = OPi - ΔOPi), thereby reducing the liquid injection flow rate Gi (step S16). When the discharge temperature Td is greater than the target discharge temperature Tds, the controller 1a performs a control so as to increase the opening degree OPi of the bypass expansion valve 32 (i.e., OPi = OPi + ΔOPi), thereby increasing the liquid injection flow rate Gi (step S17). When the discharge temperature Td is equal to the target discharge temperature Tds, the controller 1a performs control so as to maintain the opening degree OPi of the bypass expansion valve 32 (i.e., OPi = OPi), and the liquid injection flow rate Gi is thereby maintained (step S18). After steps S16, S17, and S18 are performed, the process returns to step S2, and step S6 (i.e., steps S11 through S18) is repeated as long as the operating conditions for performing the liquid injection control of steps S2 through S5 are satisfied. As for the opening degree OPi of the bypass expansion valve 32 herein, the upper limit opening degree OPix determined by the correlation value with respect to the opening degree OPe of the heat-source-side expansion valve 28 is the upper limit of the movable opening degree range, as described above. The opening degree change width ΔOPI of the bypass expansion valve 32 is obtained from the deviation between the discharge temperature Td and the target discharge temperature Tds. When the discharge temperature Td is less than the target discharge temperature Tds, out of concern for liquid compression and other problems, the opening degree change width ΔOPi is set to a value larger than the opening degree change width ΔOPi that occurs when the discharge temperature Td is greater than the target discharge temperature Tds, so that the liquid injection flow rate Gi decreases as quickly as possible.

Through this configuration, when the discharge temperature Td is higher than the target discharge temperature Tds in the heat pump system 1, even when the opening degree OPi of the bypass expansion valve 32 is controlled so as to increase, the bypass expansion valve 32 can be opened no further than the upper limit opening degree OPix determined by the correlation value with respect to the opening degree OPe of the heat-source-side expansion valve 28. Liquid compression and other problems are therefore less prone to occur, and the reliability of the compressor 21 is easily maintained. Since the movable opening degree range of the bypass expansion valve 32 in liquid injection control is also then determined according to the opening degree OPe of the heat-source-side expansion valve 28, the controllability in liquid injection control is also enhanced. In particular, since the operating capacity of the compressor 21 is controlled, and the heat-source-side expansion valve 28 is controlled as described above in the heat pump system 1, the opening degree OPe of the heat-source-side expansion valve 28 changes significantly, but despite such a configuration, restricting appropriately the action of the bypass expansion valve 32 contributes to maintaining the reliability of the compressor 21 and enhancing the controllability of liquid injection control.

In the heat pump system 1 as described above, the desired operating capability can be obtained while the reliability of the compressor 21 is maintained, even under operating conditions in which the compression ratio of the compressor 21 is large. In particular, since the heat pump system 1 is configured so as to utilize the heat of the aqueous medium heated in the usage-side heat exchanger 41 as a radiator, a high-temperature (e.g., 60°C) aqueous medium is sometimes needed, and operating conditions in which the compression ratio of the compressor 21 is large are prone to occur in such cases, as described above. However, despite such a configuration in the heat pump system 1, the desired operating capability can be obtained while the reliability of the compressor is maintained.

In the heat pump system 1, the correlation value between the upper limit opening degree OPix of the bypass expansion valve 32 and the opening degree OPe of the heat-source-side expansion valve 28 in liquid injection control includes a pressure drop coefficient γ, as described above. Therefore, in the heat pump system 1, the upper limit opening degree OPix of the bypass expansion valve 32 in liquid injection control can be even more appropriately set with consideration for the pressure drop characteristics of the main refrigerant circuit 20 and the bypass circuit 30 side.

In the heat pump system 1, the correlation value between the upper limit opening degree OPix of the bypass expansion valve 32 and the opening degree OPe of the heat-source-side expansion valve 28 in liquid injection control also includes a dryness coefficient β, as described above. Therefore, the upper limit opening degree OPix of the bypass expansion valve 32 in liquid injection control can be even more appropriately set by taking into account the dryness of the refrigerant drawn into the compressor 21, the refrigerant being obtained by the merging of the refrigerant flowing through the bypass circuit 30 and the refrigerant flowing through the main refrigerant circuit 20.

-Predictive control of the Bypass Expansion Valve-

During the liquid injection control described above, when a change in the capacity of the compressor 21 occurs, and the discharge temperature Td is no longer equal to the target discharge temperature Tds, the bypass expansion valve 32 used as the bypass depressurization mechanism is controlled so that the discharge temperature Td is equal to the target discharge temperature Tds (steps S11 through S18 of FIG 3).

However, when the degree of change in the capacity of the compressor 21 is large, time may be required for the discharge temperature Td to reach the target discharge temperature Tds.

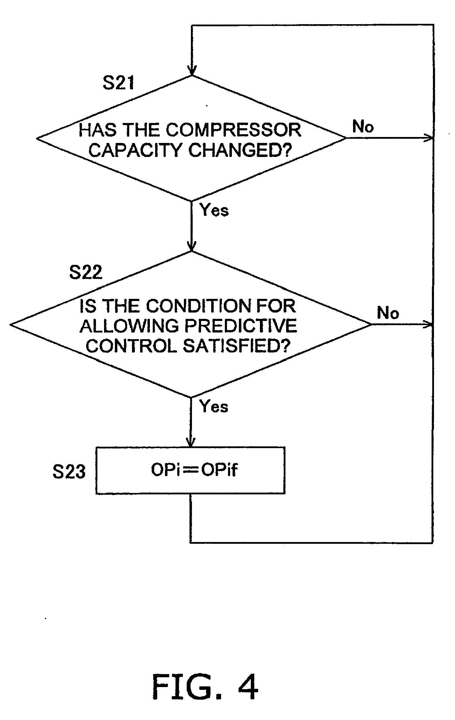

Therefore, as shown in FIG 4, when the capacity of the compressor 21 is changed during liquid injection control, the opening degree OPi of the bypass expansion valve 32 may be changed to a predicted opening degree OPif, which is an opening degree predicted according to the degree of change in the capacity of the compressor 21.

More specifically, the controller 1a determines in step S21 whether a change has occurred in the capacity of the compressor 21.

Then, when a decision is made in step S21 that the capacity of the compressor 21 has changed, the controller 1a determines in step S22 whether a condition for allowing predictive control is satisfied. The condition for allowing predictive control herein is a condition for determining whether increasing the liquid injection flow rate Gi or decreasing the liquid injection flow rate Gi is clearly indicated according to the change in capacity of the compressor 21. In other words, when the change in capacity of the compressor 21 is in the direction of increasing the operating capacity (e.g., the direction of increasing the operating frequency of the compressor 21), and the discharge temperature Td is not excessively less than the target discharge temperature Tds (e.g., the discharge temperature Td is higher than the Tdsm, which is a temperature slightly less than the target discharge temperature Tds), since rapidly increasing the liquid injection flow rate Gi poses minimal risk of liquid compression and other problems, predictive control of the bypass expansion valve 32 can be allowed in this case. When the change in capacity of the compressor 21 is in the direction of decreasing the operating capacity (e.g., the direction of decreasing the operating frequency of the compressor 21), and the discharge temperature Td is not excessively higher than the target discharge temperature Tds (e.g., the discharge temperature Td is higher than the Tdsx, which is a temperature slightly greater than the target discharge temperature Tds), since rapidly decreasing the liquid injection flow rate Gi poses minimal risk of superheat compression and other problems, predictive control of the bypass expansion valve 32 can be allowed in this case.

When a decision is made in step S22 that the condition for allowing predictive control is satisfied, the controller 1a in step S23 changes the opening degree OPi of the bypass expansion valve 32 to the predicted opening degree OPif and proceeds to liquid injection control. The predicted opening degree OPif herein is a value obtained based on the operating frequency Fta of the compressor 21 prior to the change in capacity, and the operating frequency Ftb of the compressor 21 after the change in capacity, and is expressed by the equation below.

$$OPif = (Fta/Ftb)^n$$

In the equation, n is a multiplier. The predicted opening degree OPif is also not limited to being obtained using the above equation, and is only necessarily obtained in accordance with the degree of the change in capacity of the compressor 21.

Through this configuration, during liquid injection control in the heat pump system 1, the opening degree OPi of the bypass expansion valve 32 is changed to the predicted opening degree OPif according to the degree of change in the capacity of the compressor 21, prior to the action whereby the bypass expansion valve 32 is controlled so that the discharge temperature Td is equal to the target discharge temperature Tds. The discharge temperature Td can therefore be made to quickly reach the target discharge temperature Tds, and the controllability of the liquid injection control can be enhanced.

<Other Embodiments>

Embodiments of the present invention were described above based on the drawings, but the specific configuration of the present invention is not limited to these embodiments, and can be changed within a range that does not depart from the scope of the invention.

-A-

In the heat pump system described above, HFC-410A is used as the refrigerant, but this configuration is not limiting, and another refrigerant may be used.

-B-

In the heat pump system described above, an aqueous medium heating unit and a hot-water storage unit are provided as units which utilize the aqueous medium, but any one of these units may also be provided alone, or another unit which utilizes the aqueous medium may be provided.

-C-

In the heat pump system described above, the usage unit and the hot-water storage unit are configured as separate units, but the usage unit and the hot-water storage unit may also be configured as an integrated unit.

-D-

In the heat pump system described above, the heat source unit and the usage unit are configured as separate units, but the heat source unit and the usage unit may also be configured as an integrated unit.

-E-

In the heat pump system described above, a single usage unit is connected to a single heat source unit, but a plurality of usage units may also be connected to a single heat source unit.

-F-

In the heat pump system described above, a configuration is adopted which utilizes the heat of the aqueous medium heated in the usage-side heat exchanger as a refrigerant radiator, but this configuration is not limiting; the present invention can also be applied in a configuration which utilizes the heat of air heated in the usage-side heat exchanger as a refrigerant radiator when high-temperature air is required, for example.

**INDUSTRIAL APPLICABILITY**

The present invention is broadly applicable to heat pump systems for performing liquid injection into the intake side of a compressor from the portion of a main refrigerant circuit that extends from the outlet of a radiator to a main depressurization mechanism, the main refrigerant circuit being formed by connecting a variable-capacity compressor, a radiator, a variable-type main depressurization mechanism, and an evaporator.

**REFERENCE SIGNS LIST**

1 heat pump system
1a controller
2 heat source unit
20 main refrigerant circuit
21 compressor
26 heat-source-side heat exchanger (evaporator)
28 heat-source-side expansion valve (main depressurization mechanism)
30 bypass circuit
31 bypass tube
32 bypass expansion valve
41 usage-side heat exchanger (radiator)
70 aqueous medium circuit
Ke main circuit-side reference pressure drop coefficient
Ki bypass-side reference pressure drop coefficient
OPe opening degree of heat-source-side expansion valve (opening degree of main depressurization mechanism)
OPif predicted opening degree
OPix upper limit opening degree
Td discharge temperature
Tds target discharge temperature

Xe main circuit-side dryness
Xi bypass-side dryness
Xsa allowed dryness
$\beta$ dryness coefficient
$\gamma$ pressure drop coefficient

**Claims**

1. A heat pump system (1) comprising:

   a main refrigerant circuit (20) formed by connecting a compressor (21) for compressing a refrigerant; a radiator (41) for radiating the refrigerant compressed in said compressor; a variable-type main depressurization mechanism (28) for depressurizing the refrigerant radiated in said radiator; and an evaporator (26) for evaporating the refrigerant depressurized in said main depressurization mechanism;
   a bypass circuit (30) having a bypass tube (31) for connecting an intake side of said compressor and a portion of said main refrigerant circuit that extends from the outlet of said radiator to said main depressurization mechanism; and a bypass depressurization mechanism (32) for depressurizing the liquid refrigerant flowing through said bypass tube; and
   a controller (1a) for controlling said compressor, said main depressurization mechanism, and said bypass depressurization mechanism; wherein
   said bypass depressurization mechanism is a variable-type bypass depressurization mechanism; and
   said controller is configured to perform liquid injection control for controlling said bypass depressurization mechanism so that the discharge temperature (Td), which is the temperature of the refrigerant discharged from said compressor, is equal to a predetermined target discharge temperature (Tds); and the upper limit opening degree (OPix) of said bypass depressurization mechanism in said liquid injection control is determined by a correlation value with respect to the opening degree (OPe) of said main depressurization mechanism,
   **characterized in that**
   the compressor (21) is a variable capacity compressor, and
   said controller (1a) is configured to change the opening degree of said bypass depressurization mechanism (32) to a predicted opening degree (OPif), which is an opening degree predicted according to the degree of change in the capacity of said compressor, when the capacity of said compressor (21) is changed during said liquid injection control.

2. The heat pump system (1) according to claim 1, wherein

   said correlation value includes a pressure drop coefficient ($\gamma$) that is a coefficient determined by a main circuit-side reference pressure drop coefficient (Ke), which is a reference value of the flow passage resistance of said main depressurization mechanism (28), and a bypass-side reference pressure drop coefficient (Ki), which is a reference value of the flow passage resistance of said bypass depressurization mechanism (32).

3. The heat pump system (1) according to claim 2, wherein

   said correlation value includes a dryness coefficient ($\beta$), which is a coefficient determined by an allowed dryness (Xsa) corresponding to the allowed limit of dryness of the refrigerant drawn into said compressor (21), a bypass-side dryness (Xi) which is the dryness of the refrigerant in the outlet of said bypass tube (31), and a main circuit-side dryness (Xe) which is the dryness of the refrigerant in the outlet of said evaporator (26).

4. The heat pump system (1) according to any one of claims 1 through 3, wherein

   said radiator (41) is a heat exchanger for heating an aqueous medium by radiating of refrigerant compressed in said compressor (21), and is connected to an aqueous medium circuit (70) for utilizing the heat of the aqueous medium heated in said radiator.

**Patentansprüche**

1. Wärmepumpensystem (1), umfassend:

einen Hauptkühlmittelkreis (20), der gebildet ist durch verbinden eines Kompressors (21), zum Verdichten eines Kühlmittels, eines Radiators (41), zum Abstrahlen des Kühlmittels, das in dem Kompressor komprimiert wurde, einen variablen Hauptdruckentspannungsmechanismus (28), um das im Radiator abgestrahlte Kühlmittel zu entspannen, und einen Verdampfer (26), zum Verdampfen des drucklosen Kühlmittels in dem Hauptdruckentspannungsmechanismus,

einen Bypass-Kreis (30), der ein Bypass-Rohr (31) aufweist, um eine Einlassseite des Kompressors und einen Abschnitt des Hauptkühlmittelkreises, der sich von dem Auslass des Kompressors bis hin zum Hauptdruckentspannungsmechanismus erstreckt, zu verbinden, und einen Bypass-Druckentspannungsmechanismus (32) zum Entspannen des flüssigen Kühlmittels, das durch das Bypass-Rohr strömt, und

einen Controller (1a), um den Kompressor, den Hauptdruckentspannungsmechanismus und den Bypass-Druckentspannungsmechanismus zu steuern, wobei

der Bypass-Druckentspannungsmechanismus ein variabler Bypass-Druckentspannungsmechanismus ist, und die Steuerung dazu eingerichtet ist, eine Flüssigkeitseinspritzsteuerung durchzuführen, um den Bypass-Druckentlastungsmechanismus so zu steuern, dass die Abgabetemperatur (Td), die die Temperatur des vom Kompressor abgegeben Kühlmittels ist, gleich einer vorbestimmten Sollausstoßtemperatur (Tds) ist, und der obere Grenzöffnungsgrad (OPIx) des Bypass-Druckentspannungsmechanismus in der Flüssigkeitseinspritzsteuerung durch einen Korrelationswert in Bezug auf den Öffnungsgrad(OPe) des Hauptdruckentspannungsmechanismus ermittelt wird,

**dadurch gekennzeichnet, dass**

der Kompressor (21) ein Kompressor mit variabler Kapazität ist, und

die Steuerung (1a) dazu eingerichtet ist, den Öffnungsgrad des Bypass-Druckentspannungsmechanismus (32) auf einen prognostizierten Öffnungsgrad (OPif) zu ändern, der ein Öffnungsgrad ist, der entsprechend dem Grad der Veränderung der Kapazität des Kompressors prognostiziert wird, wenn die Kapazität des Kompressors (21) während der Flüssigkeitseinspritzsteuerung geändert wird.

2.  Wärmepumpensystem (1) nach Anspruch 1, wobei der Korrelationswert einen Druckabfallkoeffizienten (Y) enthält, der ein Koeffizient ist, der anhand eines hauptkreisseitigen Referenzdruckabfallkoeffizienten (Ke), der ein Referenzwert des Strömungsdurchgangswiderstand des Hauptdruckentspannungsmechanismus (28) ist, und eines bypassseitigen Referenzdruckabfallkoeffizienten (Ki), der ein Referenzwert des Strömungsdurchgangswiderstand des Bypass-Druckentspannungsmechanismus (32) ist, ermittelt wird.

3.  Wärmepumpensystem (1) nach Anspruch 2, wobei der Korrelationswert einen Trockenheitskoeffizient ($\beta$), der ein Koeffizient ist, der durch eine erlaubte Trockenheit (Xsa) ermittelt wird, die dem zulässigen Grenzwert der Trockenheit des Kühlmittels, das in den Kompressor (21) gesaugt wird, entspricht, eine Trockenheit (Xi) der Bypass-Seite, die die Trockenheit des Kühlmittels am Auslass des Bypass-Rohrs (31) ist, und eine hauptstromkreisseitige Trockenheit (Xe), die die Trockenheit des Kühlmittels am Auslass des Verdampfers (26) ist, enthält.

4.  Wärmepumpensystem (1) nach einem der Ansprüche 1 bis 3, wobei der Radiator (41) ein Wärmetauscher zum Heizen eines wässrigen Mediums ist, indem das durch den Kompressor (21) verdichtete Kühlmittel abgestrahlt wird, und mit einem Kreislauf (70) für das wässrige Medium verbunden ist, um die Wärme des durch den Radiator erwärmten wässrigen Mediums zu nutzen.

## Revendications

1.  Système de pompe à chaleur (1) comprenant :

un circuit de réfrigérant principal (20) formé par raccordement d'un compresseur (21) pour la compression d'un réfrigérant ; un radiateur (41) pour irradier le réfrigérant comprimé dans ledit compresseur ; un mécanisme de dépression principal de type variable (28) pour réduire la pression du réfrigérant irradié dans ledit radiateur ; et un évaporateur (26) pour l'évaporation du réfrigérant sous pression réduite dans ledit mécanisme de dépression principal ;

un circuit de dérivation (30) ayant un tube de dérivation (31) pour raccorder un côté d'admission dudit compresseur et une partie dudit circuit de réfrigérant principal qui s'étend de la sortie dudit radiateur audit mécanisme de dépression principal ; et

un mécanisme de dépression de dérivation (32) pour réduire la pression du réfrigérant liquide s'écoulant à travers ledit tube de dérivation ; et

un élément de commande (la) pour la commande dudit compresseur, dudit mécanisme de dépression principal et dudit mécanisme de dépression de dérivation ; dans lequel :

ledit mécanisme de dépression de dérivation est un mécanisme de dépression de dérivation de type variable ; et
ledit élément de commande est configuré pour réaliser une commande d'injection de liquide pour la commande dudit mécanisme de dépression de dérivation de sorte que la température d'évacuation (Td), qui est la température du réfrigérant évacué par ledit compresseur, soit égale à une température d'évacuation cible prédéterminée (Tds) ; et le degré d'ouverture limite supérieur (OPix) dudit mécanisme de dépression de dérivation dans ladite commande d'injection de liquide est déterminé par une valeur de corrélation par rapport au degré d'ouverture (OPe) dudit mécanisme de dépression de dérivation,

**caractérisé en ce que** :

le compresseur (21) est un compresseur à capacité variable et
ledit élément de commande (la) est configuré pour modifier le degré d'ouverture dudit mécanisme de dépression de dérivation (32) en un degré d'ouverture prévu (OPif), qui est un degré d'ouverture prévu selon le degré de changement de la capacité dudit compresseur, lorsque la capacité dudit compresseur (21) est modifiée pendant ladite commande d'injection de liquide.

2. Système de pompe à chaleur (1) selon la revendication 1, dans lequel :

ladite valeur de corrélation comprend un coefficient de chute de pression ($\gamma$) qui est un coefficient déterminé par un coefficient de chute de pression de référence côté circuit principal (Ke), qui est une valeur de référence de la résistance au passage de flux dudit mécanisme de dépression de dérivation principal (28), et un coefficient de chute de pression de référence côté dérivation (Ki), qui est une valeur de référence de la résistance au passage de flux dudit mécanisme de dépression de dérivation (32).

3. Système de pompe à chaleur (1) selon la revendication 2, dans lequel :

ladite valeur de corrélation comprend un coefficient de siccité ($\beta$), qui est un coefficient déterminé par une siccité autorisée (Xsa) correspondant à la limite de siccité autorisée du réfrigérant aspiré dans ledit compresseur (21), une siccité côté dérivation (Xi) qui est la siccité du réfrigérant dans la sortie dudit tube de dérivation (31) et une siccité côté circuit principal (Xe) qui est la siccité du réfrigérant dans la sortie dudit évaporateur (26).

4. Système de pompe à chaleur (1) selon l'une quelconque des revendications 1 à 3, dans lequel :

ledit radiateur (41) est un échangeur de chaleur pour le chauffage d'un milieu aqueux par irradiation du réfrigérant comprimé dans ledit compresseur (21) et est raccordé à un circuit de milieu aqueux (70) pour l'utilisation de la chaleur du milieu aqueux chauffé dans ledit radiateur.

FIG. 1

S1 | INITIAL STATE OF BYPASS EXPANSION VALVE

S2 — IS THE COMPRESSOR OPERATING? — No

Yes

S3 — IS AIR WARMING/HOT-WATER SUPPLY OPERATION IN EFFECT? — No

Yes

S4 — $OPe > OPem$? — No

Yes

S5 — $SHC > SHCm$? — No

Yes

S6 | LIQUID INJECTION CONTROL

# FIG. 2

S6

START

S11

IS THE BYPASS
EXPANSION VALVE IN
THE INITIAL STATE? —— Yes

No

S12 | OPi＝OPii

S13 | DETERMINE OPix

S14

Td＞Tds? —— No

Yes

S15

Td＜Tds? —— No

Yes

S16 | OPi＝OPi＋ΔOPi    S17 | OPi＝OPi—ΔOPi    S18 | OPi＝OPi

END

# FIG. 3

S21

HAS THE COMPRESSOR
CAPACITY CHANGED?

No

Yes

S22

IS THE CONDITION FOR
ALLOWING PREDICTIVE
CONTROL SATISFIED?

No

Yes

S23   $OPi = OPif$

# FIG. 4

**EP 2 407 735 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007163099 A
- JP 2000274859 A